# EUROPEAN PATENT APPLICATION

(11) **EP 1 857 266 A2**
(43) Date of publication of application: **21.11.2007**
(21) Application number: 07108401.6
(22) Date of filing: 17.05.2007
(51) Int. Cl.: B32B 5/22, B32B 15/08, A47K 3/28

(54) **Shower cubicle and method of production**

(30) Priority: 19.05.2006 IT UD20060126
(71) Applicant: Tonello, Armando, 36015 Schio (VI) (IT)
(72) Inventor: Gresele, Daniele, 36015, Schio (VI) (IT); Pham, Thuy, Anaheim, CA 92805 (US)
(74) Representative: Petraz, Gilberto Luigi

(57) **Abstract**

Shower cubicle comprising at least an equipped panel (11, 12), formed by a plurality of layers (22, 25, 26, 40, 41, 42) of different materials coupled with each other in sandwich fashion.

## Description

### FIELD OF THE INVENTION

The present invention concerns a shower cubicle, for example but not exclusively, of the multi-functional type suitable for the programmed delivery of a plurality of jets of water and/or production of a high humidity environment such as a Turkish bath or suchlike. The present invention also concerns the method to produce said shower cubicle.

### BACKGROUND OF THE INVENTION

Shower cubicles are known, for example of the so-called multi-functional type, used in a programmed manner to deliver a plurality of jets or sprays of water, and/or to produce a high humidity environment, for example a Turkish bath.

It is known that such shower cubicles substantially consist of one or more equipped panels, normally two, disposed adjacent to each other, two vertical closing doors able to be selectively opened to allow the user access to the shower cubicle, and a shower base that connects the vertical equipped panels and the closing doors at the lower part. Known shower cubicles also possibly comprise a roof that connects the vertical equipped panels and the closing doors at the upper part, determining a completely closed environment inside the cubicle.

Normally, the equipped panels are made, for example, of ABS, methacrylate, polycarbonate or other, polished on the visible surface, and substantially all the necessary electric, electronic and hydraulic components are mounted on them; these include nozzles, distributors, taps and fittings or other aesthetic-functional equipment, such as command panels, colored light emitters, sound distribution plants or other.

In the field of sanitary fixtures, a growing need is felt to produce shower cubicles that realistically reproduce real spa environments, both by equipping the panels with hydraulic components having a large number of functions, and also by making an internal environment with materials and technologies characteristic of spa centers, for example visible walls on which coloring or graphical decorations are made, or covered by rigid decoration elements such as stones, crystals, wood, mosaic tesserae, tiles or other.

As far as the coloring or graphical decorations on visible walls are concerned, different molding and coloring techniques are normally used, which require particular processes in order to guarantee the duration of the color on the fiber glass.

On the contrary, as far as the production of an internal environment with mosaic tesserae, or other rigid decoration elements, is concerned, the usual techniques to produce panels have various disadvantages, for example of a structural nature, in actuating an effective laying of the rigid decoration elements, in any case obtaining non-satisfactory results, and are difficult to produce on an industrial scale.

In any case, in known techniques to produce such shower cubicles, pre-formed and pre-decorated panels are used, but these have pre-defined sizes, shapes and finishing, thus limiting the possibility of personalizing and modifying the shower cubicle.

Moreover, in the state of the art, in order to justify the expense of industrialization, a high standardized production of panels is necessary, which entails large stocks in the warehouse, with a consequent increase in the costs and spaces of warehousing.

One purpose of the present invention is therefore to make a shower cubicle which is easy and economical to make, which, while keeping substantially unchanged the sizes and functions of a standard shower cubicle, has at least a visible surface that is decorated and/or consists of rigid decoration elements made of materials, such as stones, crystals, wood, mosaic tesserae or other, which can faithfully reproduce a spa environment and which, at the same time, is easy to personalize and modify, at a relatively limited cost.

Another purpose of the present invention is to perfect a method that allows to produce, on an industrial scale, a shower cubicle effectively and economically, having at least an internal surface that is decorated and/or consists of rigid decoration elements, reducing to a minimum the costs and spaces of warehousing.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a shower cubicle according to the present invention comprises at least an equipped panel which, according to a characteristic feature of the present invention, comprises a plurality of layers of different materials, coupled with each other in sandwich fashion.

In a first preferential form of embodiment, the equipped panel consists of at least a first visible layer made with a plurality of rigid decoration elements such as mosaic tesserae and/or tiles, connected to each other by means of a first polymer material, a second intermediate layer made by means of foam spraying of a second polymer material, and a third layer, not visible, made of composite material, for example with a polymer base such as fiber glass.

In a second preferential form of embodiment, the equipped panel consists of co-extruded composite material, for example consisting of three layers, respectively two external layers made of aluminum and an internal layer made of polyethylene.

In another preferential form of embodiment, in which the equipped panel is provided with electro-hydraulic means for the selective delivery of the water, such as for example taps, nozzles, pipes, displays, selection panels or other, the third layer, or the co-extruded composite material, is shaped so as to define, with an external brick door, a technical compartment to house at least part of said electro-hydraulic means.

According to the invention, moreover, the method to produce the shower cubicle provides at least a first production step, in which each equipped panel is made by sandwich-type coupling of a plurality of layers of different materials.

In a first form of embodiment, the first step comprises at least a first decoration sub-step, in which the rigid decoration elements are reciprocally disposed according to a determinate pattern and the epoxy resin is applied on them in order to determine their definitive reciprocal disposition, and thus achieve the first layer.

In a second foaming sub-step, on the first layer thus formed the layer of polyurethane material is disposed by foam spraying. The two layers are welded together due to chemical-physical affinity of the first and second material.

In a third finishing sub-step, the third structural fiber glass layer is made on the second layer, once this is polymerized. In this case too, the two layers are welded together due to chemical-physical affinity of the two materials.

A second form of embodiment, which in any case comes within the field of the present invention, provides that the first production step comprises at least a first sub-step to form the co-extruded composite material, according to the shape and operating sizes of the panel, and a second deposition sub-step, in which, on at least an external surface of the co-extruded composite material a second decorative layer is deposited, consisting for example of a graphical print, or rigid decoration elements.

The panel thus made has a visible surface made with the characteristic materials of spa environments, substantially without compromising the sizes and normal functions of multi-functional shower cubicles.

In fact, the panel made according to the present invention, although it has great structural rigidity that allows it to effectively support the rigid decoration elements, has a relatively limited thickness, for example comprised between about 10 millimeters and about 20 millimeters, and at the same time guarantees that the parts can be personalized.

Moreover, the materials that make up the panel according to the present invention are easy to work, without requiring particular cutting and forming tools and/or techniques.

Advantageously, during the step of making the first layer, the rigid decoration elements are disposed on the first base support so as to define desired spaces for housing the electro-hydraulic means that protrude from the visible door of the panel. In the same way, during the subsequent steps of making the second and third layer, specific mold models are provided, which provide to make electric and/or hydraulic feed pipes for said electro-hydraulic means.

With the panel according to the present invention it is thus possible to make, simply and economically, a multi-functional shower cubicle which can be equipped substantially with all the traditional functions available, and covered internally with a plurality of mosaic tesserae so as to faithfully reproduce a spa environment.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is a perspective and partly sectioned view of a shower cubicle according to the present invention;
- fig. 2 shows a cross section of a first form of embodiment of an equipped panel of the shower cubicle according to the present invention;
- fig. 3 shows schematically a first step of the method to make the equipped panel in fig. 2;
- fig. 4 shows schematically a second step of the method to make the equipped panel in fig. 2;
- fig. 5 shows schematically a third step of the method to make the equipped panel in fig. 2,
- fig. 6 shows a cross section of a second form of embodiment of an equipped panel of the shower cubicle according to the present invention;
- fig. 7 shows a variant of fig. 6;
- fig. 8 shows schematically a first step of the method to make the equipped panel in fig. 6;
- fig. 9 shows schematically a second step of the method to make the equipped panel in fig. 6.

### DETAILED DESCRIPTION OF SOME PREFERENTIAL FORMS OF EMBODIMENT

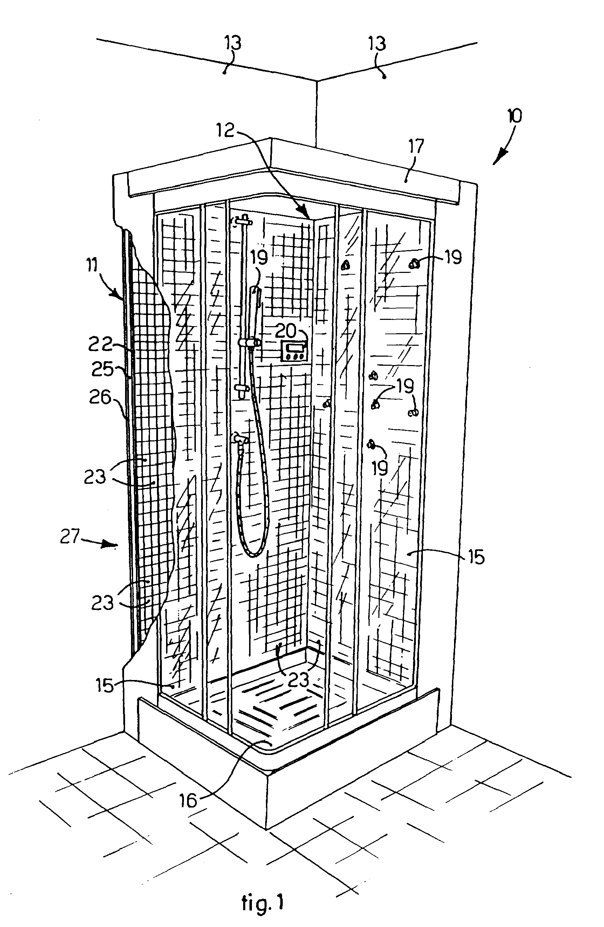

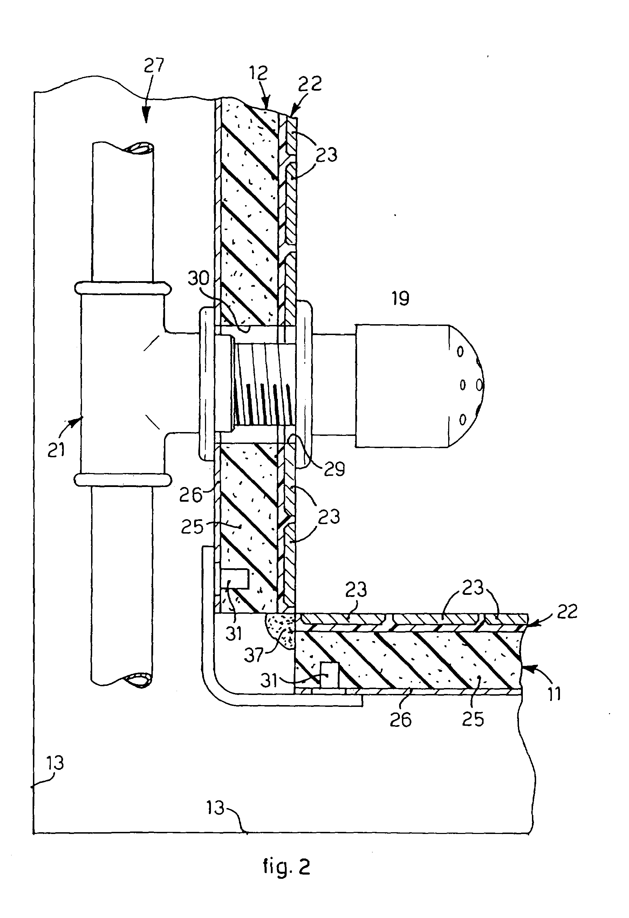

With reference to figs. 1 to 5, a shower cubicle 10, hereafter called more simply cubicle 10, according to the present invention comprises two equipped panels, respectively 11 and 12, adjacent to each other and disposed next to respective brick doors 13, two closing doors 15 disposed at the front, and made in a known manner by means of two or more sheets of glass, in this case sliding reciprocally with respect to each other so as to allow access inside the cubicle 10, and a shower base 16 that connects at the lower part the two equipped panels 11 and 12 with the closing doors 15, and which defines the hydraulic discharge of the cubicle 10.

In this case, the cubicle 10 is of the multi-functional type, and is also provided with a roof 17 that connects at the upper part the two equipped panels 11 and 12 with the closing doors 15, in order to define a completely closed environment inside the cubicle 10.

Advantageously, in correspondence with the join edges of the two equipped panels 11 and 12, the closing doors 15, the shower base 16 and the roof 17, it is provided to deposit silicone 37, or other insulation with the function of a gasket and hydraulic seal.

On the visible surface of each equipped panel 11 and 12 a plurality of tap components 19 are provided, such as for example nozzles, distributors, mixer knobs, flow selectors or other, and electronic selection devices 20 electronically connected to a calculator, not shown here, and by means of which the user can select the different delivery functions of the water jets that can be delivered by some of the tap components 19.

On the non-visible surface of each equipped panel 11 and 12, on the contrary, hydraulic connection members are provided, such as connectors, pipes, pressure switches, electro valves or other, which allow to convey and manage the flows of water towards one or the other of the tap components 19, according to the selections made by the user on the electronic selection devices 20.

Each equipped panel 11 and 12 substantially consists of a first layer 22, or visible layer, in this case made by means of a plurality of mosaic tesserae 23 connected to each other by means of an epoxy resin, in this case of the fluid bicomponent type, castable and solvent-free, a second layer 25, or intermediate layer, made by foam spraying a polyurethane material, for example polyether based, and a third layer 26, or non-visible layer, made of fiber glass and shaped so that, in cooperation with a respective brick door 13, it defines a technical compartment 27, in which the hydraulic connection members 21 and the possible calculator unit are housed.

The first layer 22 also comprises a plurality of through seatings 29 made, as we shall see later, during the forming step, and able to allow to house the various tap components 19 and the electronic selection devices 20.

The second layer 25 and the third layer 26 also comprise, in correspondence with the through seatings 29 of the first layer 22, respective passage seatings 30, which allow the electric and/or hydraulic cables to pass through the panel 11 or 12, from the technical compartment 27 to the respective tap components 19 and the electronic selection devices 20.

In particular, the passage seatings 30 provided on the third layer 26 are made in such a manner as to allow to assemble possible hydraulic connection members 21.

Each panel 11 and 12 is also provided with a desired and corresponding number of threaded rivets 31, incorporated inside the second layer 25, open towards the outside of the third layer 26 and facing towards the technical compartment 27.

The threaded rivets 31 allow to screw in clamping screws, of a substantially known type and not shown, in order to attach to each panel 11, 12 angular brackets 32 to reciprocally connect the two adjacent panels 11 and 12.

The method to produce the shower cubicle 10 as described heretofore is as follows.

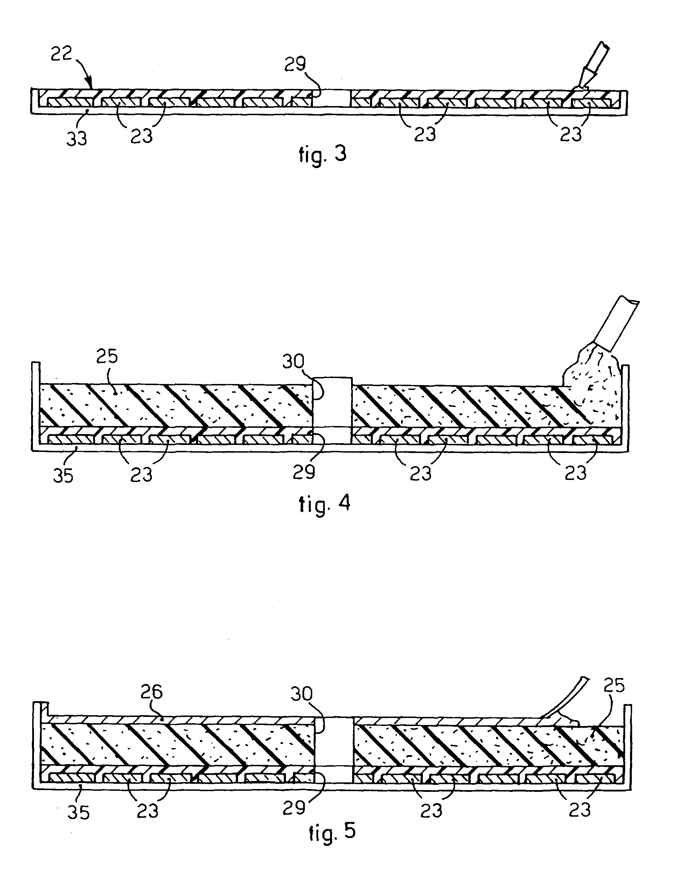

First of all the two equipped panels 11 and 12 are made, in multi-layer, substantially following the steps shown schematically in figs. 3, 4 and 5.

In particular, in a first decoration step (fig. 3), the mosaic tesserae 23 are positioned on a relative base support 33 in a pre-established order and with their visible face facing downwards, also taking into prior account the spaces needed to make the through seatings 29 for housing the various tap components 19 and the electronic selection devices 20.

According to some variants, the mosaic tesserae 23 can be positioned one by one or in pre-formed panels, just as the base support can comprise, or not, surface ridges to guide the correct positioning of the individual mosaic tesserae 23.

In this first decoration step, the epoxy resin is deposited on the non-visible surface of the mosaic tesserae 23, so that it covers the mosaic tesserae 23 completely and penetrates between the grooves defined between them.

The epoxy resin is then made to polymerize definitively in order to establish the definitive reciprocal positioning of the mosaic tesserae 23.

Advantageously, the epoxy resin used is such as to create, on the visible face of the first layer, a filler effect on the grooves, so that no further surface finishing is needed.

Alternatively, at the end of the steps to make the equipped panels 11 and 12, the traditional operations of grouting are carried out, with suitable cement fillers.

Once the first layer 22 has been made, this is positioned with the visible face facing downwards, on a second base support 35 and, on its non-visible surface, that is, the one completely consisting of the polymerized resin, a desired number of layers of polyurethane material are deposited by means of foam spraying (fig. 4).

The reciprocal connection between the first layer 22 and the second layer 25 occurs by physical crimping of the polyurethane material on the polymerized resin.

Advantageously, before carrying out the foam spraying, at least in correspondence with the through seatings 29, specific mold models 36 are positioned which, once removed, allow to pre-form the respective passage seatings 30.

Moreover, during this spraying step, before the last layers of polyurethane material are deposited, the threaded rivets 31 are positioned, so that at the end of the process these are at least partly incorporated in the second layer 25.

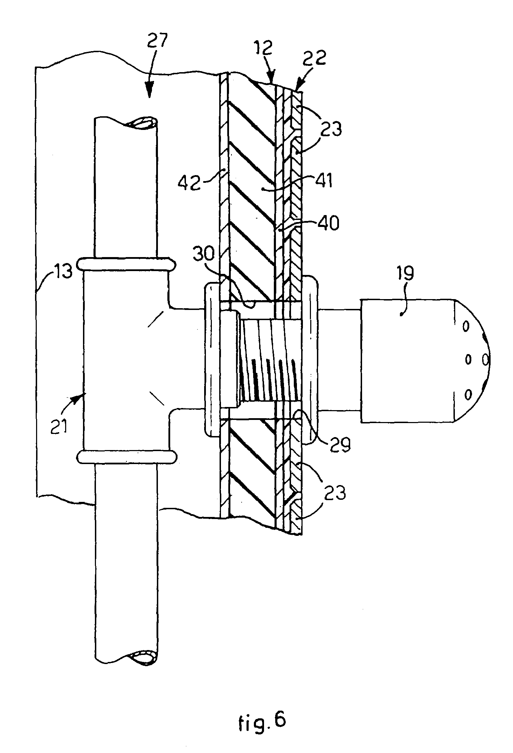

In a third step of finishing the equipped panels 11 and 12 (fig. 5), it is provided to make the third layer 26 of fiber glass directly on the external surface of the second layer 25. The fiber glass physically aggregates with the polymerized foamy polyurethane which makes up the second layer 25, and welds the two layers together.

This third and last layer 26 is made taking into account both the through seatings 29 and the respective hydraulic connection members 21, the amplitude and form necessary for the technical compartment 27, and also the positioning of the threaded rivets 31.

At the end of the above three steps to make the equipped panels 11 and 12, the various tap components 19, the electronic selection devices 20, and the hydraulic connection members 21 are mounted on them; all the necessary electric and hydraulic cabling is also performed.

The two equipped panels 11 and 12 are then connected with each other by means of the angular brackets 32 and mounted in a substantially traditional manner on the shower base 16.

Finally, the cubicle 10 is completed by assembling the remaining structural components in a traditional manner.

Also according to the form of embodiment shown in figs. 6, 8 and 9, each equipped panel 11 and 12 substantially consists of a first layer 22, or visible layer, made, as in the previous case, by a plurality of mosaic tesserae 23 connected to each other by means of a solvent-free epoxy resin.

In particular, according to the form of embodiment shown in figs. 6, 8 and 9, each panel also consists of a co-extruded composite material comprising a first layer 40 made of metal material, in this case aluminum or an alloy thereof, a second, intermediate layer 41, made of polymer material, in this case polyethylene, and a third layer 42 made of metal material, substantially equal to the first layer 40.

This type of panel, substantially consisting of inert materials, has a low environmental impact and its production does not require the use of industrial suction plants, or of particular accident prevention clothing for the workers, reducing the overall costs of production.

Simply to give a non-restrictive example, the co-extruded composite material is of the type found on the market under the commercial name Dibond®. This solution allows to considerably reduce the expenses and stock of material in the warehouse.

The method to produce the shower cubicle 10 according to this last form of embodiment is as follows.

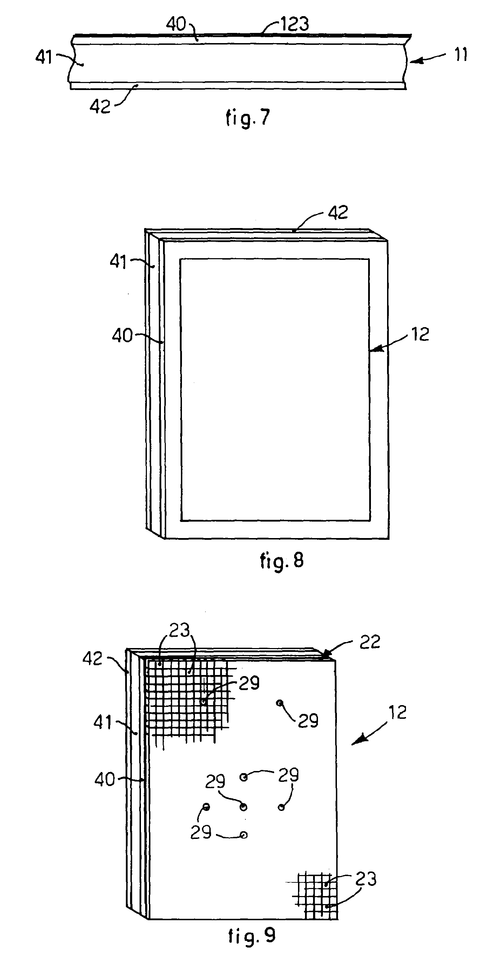

First of all, the two panels 11, 12 are made, in multi-layer, substantially following the steps shown schematically in figs. 8 and 9.

In a first shaping step (fig. 8), each panel 11 and 12 is shaped by cutting out, according to predefined shape and sizes, a standardized strip of Dibond®, possibly also making aesthetic bends or rounded parts on the relative panel 11, 12 to be made.

In a second deposition step (fig. 9), the mosaic tesserae 23 are positioned on the first layer 40 made of aluminum in a pre-determined order, also taking into prior account the spaces needed to make the through holes 29 that house the various tap components 19 and the electronic selection devices 20.

In this second step, the epoxy resin is deposited on the non-visible surface of the mosaic tesserae 23 so that it completely covers the mosaic tesserae 23 and penetrates into the grooves defined between them.

The epoxy resin is then made to polymerize definitively so as to establish the definitive reciprocal positioning of the mosaic tesserae 23.

According to the variant shown in fig. 7, instead of the mosaic tesserae 23 it is possible to provide directly one or more serigraphic or digital prints 123, representing the desired decorations.

At the end of said two steps to produce the equipped panels 11 and 12, the various tap components 19, electronic selection devices 20 and the hydraulic connection members 21 are mounted on them, and all the necessary electric and hydraulic cabling is performed.

It is clear, however, that modifications and/or additions of parts or steps may be made to the cubicle 10 and relative production method as described heretofore, without departing from the field and scope of the present invention.

For example, it comes within the field of the present invention to provide that the shower base 16 and the roof 17 are also made with the visible surface made of mosaic according to the method of the present invention.

It also comes within the field of the present invention to provide that instead of the mosaic tesserae 23 different rigid decoration elements can be provided, such as for example tiles, small slabs of marble or composite material, or others.

According to another variant, a plurality of light emitters, such as lamps, LED or other, are associated with the two equipped panels 11 and 12, which emit different light waves inside the cubicle 10, with a cryotherapy function.

According to another variant, sound distribution devices are mounted on the two equipped panels 11 and 12.

It is also clear that, although the present invention has been described with reference to specific examples, a person of skill in the art shall certainly be able to achieve many other equivalent forms of multi-functional shower cubicle and relative method of production, having the characteristics as set forth in the claims and hence all coming within the field of protection defined thereby.

## Claims

1. Shower cubicle comprising at least a first equipped panel (11, 12), **characterized in that** said first equipped panel (11, 12) comprises a plurality of layers (22, 25, 26, 40, 41, 42) of different materials coupled with each other in sandwich fashion.

2. Shower cubicle as in claim 1, **characterized in that** said first equipped panel (11, 12) comprises at least a first visible layer (22) made with a plurality of rigid decoration elements (23) connected to each other by means of a first polymer material, a second intermediate layer (25) made by means of foam spraying a second polymer material, and a third layer (26), not visible, made of a composite material.

3. Shower cubicle as in claim 2, **characterized in that** said rigid decoration elements comprise a plurality of mosaic tesserae (23).

4. Shower cubicle as in claim 2 or 3, **characterized in that** said rigid decoration elements comprise a plurality of tiles.

5. Shower cubicle as in any claim from 2 to 4, **characterized in that** said first polymer material is an epoxy resin.

6. Shower cubicle as in claim 5, **characterized in that** said epoxy resin is a fluid bicomponent resin, castable and solvent-free.

7. Shower cubicle as in any claim from 2 to 6, **characterized in that** said second polymer is a polyurethane.

8. Shower cubicle as in claim 7, **characterized in that** said polyurethane is polyether based.

9. Shower cubicle as in any claim from 2 to 8, **characterized in that** said composite material is polymer based.

10. Shower cubicle as in claim 1, **characterized in that** said first equipped panel (11, 12) is made of a co-extruded composite material.

11. Shower cubicle as in claim 10, **characterized in that** said co-extruded composite material comprises a first layer (40) made of metal material, a second intermediate layer (41) made of polymer material, and a third layer (42) made of metal material.

12. Shower cubicle as in claim 11, **characterized in that** said metal material is aluminum, or an alloy thereof, and that said polymer material is polyethylene.

13. Shower cubicle as in any claim hereinbefore, wherein said first equipped panel (11, 12) is provided with electro-hydraulic means (19, 20, 21) for the selective delivery of water, **characterized in that** said third layer (26), or said co-extruded composite material, is shaped so as to define with an external brick door (13) a technical compartment (27) to house at least part of said electro-hydraulic means (19, 20, 21).

14. Shower cubicle as in claim 13, **characterized in that** said first layer (22) comprises a plurality of through seatings (29) able to allow to house at least part of said electro-hydraulic means (19, 20, 21), and **in that** said second layer (25) and said third layer (26), or said co-extruded composite material, comprise, in correspondence with said through seatings (29), respective passage seatings (30) able to allow at least part of said electro-hydraulic means (19, 20, 21) to pass through said equipped panel (11, 12), from said technical compartment (27) to the inside of said shower cubicle (10).

15. Shower cubicle as in claim 13 or 14, **characterized in that** said first equipped panel (11, 12) is also provided with a plurality of threaded elements (31), at least partly incorporated inside said second layer (25), open towards the outside of said third layer (26) and facing towards said technical compartment (27) in order to allow to attach respective brackets (32) to said panel (11, 12) in order to connect with an adjacent panel (11, 12).

16. Shower cubicle as in any claim hereinbefore, **characterized in that** it also comprises at least a second equipped panel (11, 12), two closing doors (15) able to allow access inside said cubicle (10), and a shower base (16) which connects at the lower part said two equipped panels (11, 12) with said closing doors (15).

17. Shower cubicle as in claim 16, **characterized in that** it also comprises a roof (17) able to connect at the upper part said two equipped panels (11, 12) with said closing doors (15), in order to define a completely closed environment inside said shower cubicle (10).

18. Shower cubicle as in claims 2 and 17, **characterized in that** said shower base (16) and/or said roof (17) comprise a visible surface at least partly covered with said rigid decoration elements (23).

19. Method to make a multi-functional shower cubicle comprising at least an equipped panel (11, 12), **characterized in that** it comprises at least a first step of making said equipped panel (11, 12), in which a plurality of layers (22, 25, 26, 40, 41, 42) of different materials are coupled with each other in sandwich-fashion.

20. Method as in claim 20, **characterized in that** said first step of production comprises at least the following sub-steps:
- a first decoration sub-step in which a first layer (22) is made, in which a plurality of rigid decoration elements (23) are disposed according to a pre-determined order on a first base support (33), and in which on the non-visible surface of said rigid decoration elements (23) a first polymer material is deposited, to reciprocally connect said rigid decoration elements (23);
- a second foaming sub-step, in which a second layer (25) is made, in which said first layer (22) is positioned on a second base support (35) and on its non-visible surface a desired number of layers of a second polymer material are deposited by foam spraying; and
- a third finishing sub-step, in which a third layer (26) is made by depositing a composite material on an external surface of said second layer (25).

21. Method as in claim 20, wherein said equipped panel (11, 12) is provided with electro-hydraulic means (19, 20, 21) for the selective delivery of water, **characterized in that** during said first sub-step said rigid decoration elements (23) are disposed on said first base support (33) so as to define a plurality of through seatings (29) to house at least part of said electro-hydraulic means (19, 20, 21).

22. Method as in claim 21, **characterized in that** during said second sub-step, at least in correspondence with said through seatings (29), the method provides to position corresponding mold models (36) to define relative passage seatings (30) able to allow at least part of said electro-hydraulic means (19, 20, 21) to pass through said equipped panel (11, 12), from said technical compartment (27) to the inside of said shower cubicle (10).

23. Method as in any claim from 20 to 22, **characterized in that** in said second sub-step a plurality of threaded elements (31) are at least partly incorporated, able to allow the attachment to said panel (11, 12) of respective brackets (32) to connect with an adjacent panel (11, 12).

24. Method as in any claim from 20 to 23, **characterized in that** at the end of said three sub-steps said electro-hydraulic means (19, 20, 21) is mounted on said equipped panel (11, 12).

25. Method as in claim 19, **characterized in that** said first production step comprises at least the following sub-steps:
- a first sub-step to shape a co-extruded composite material according to the shape and operating sizes of said panel (11, 12); and
- a second deposition sub-step, in which a decorative layer is deposited on at least an external surface of said co-extruded composite material.
